# EUROPÄISCHE PATENTSCHRIFT

(11) **EP 2 442 079 B1**
(45) Veröffentlichungstag und Bekanntmachung des Hinweises auf die Patenterteilung: **06.11.2019**
(21) Anmeldenummer: 11180610.5
(22) Anmeldetag: 08.09.2011
(51) Int. Cl.: G01F 23/04, G01F 23/24

(54) **Kontaktstift**
Contact pin
Tige de contact

(30) Priorität: 12.10.2010 DE 102010038121
(43) Veröffentlichungstag der Anmeldung: 18.04.2012
(73) Patentinhaber: Geiger Automotive GmbH, 82418 Murnau (DE)
(72) Erfinder: Straßberger, Peter, 82491 Grainau (DE)
(74) Vertreter: Lermer, Christoph

(56) Entgegenhaltungen:
- EP-A1- 2 113 068
- WO-A1-2008/059020
- DE-A1- 2 452 492
- DE-A1- 10 116 509
- DE-A1-102004 062 087
- DE-U1- 8 321 845
- US-A- 3 666 903
- US-A1- 2004 246 140

## Beschreibung

### TECHNISCHES GEBIET

Die Erfindung betrifft einen Kontaktstift für einen Behälter, insbesondere einen Kühlwasserbehälter, wobei der Kontaktstift einen Hauptkörper mit einer Längsachse, ein erstes Ende und ein zweites Ende aufweist, wobei das erste Ende zur Abnahme von Messsignalen und das zweite Ende als Messelektrode ausgebildet ist. Während das zweite Ende zum Erfassen bzw. Aufnehmen von Messrohdaten dient, wird das erste Ende zum Abgeben, Ableiten, Abgreifen, Weiterleiten bzw. Bereitstellen der Messrohdaten zur Auswertung an ein entsprechendes Gerät verwendet.

Des Weiteren betrifft die Erfindung einen Behälter mit einem Kontaktstift, wobei der Behälter eine Außenwand umfasst, in der eine Öffnung zur Aufnahme des Kontaktstifts vorgesehen ist, wobei der Kontaktstift durch die Öffnung in den Innenraum des Behälters ragt.

Darüber hinaus betrifft die Erfindung ein Herstellverfahren für einen Behälter mit einem Kontaktstift bzw. für einen Kontaktstift.

### STAND DER TECHNIK

Bei herkömmlichen Behältern mit einer Füllstandsmessungseinrichtung sind Kontaktstifte in die Wand des Behälters eingelegt. Zur Herstellung des Behälters werden die Kontaktstifte mit einer Dichtung versehen, in ein Behälterspritzgusswerkzeug eingelegt und mit der Behälterwand insbesondere im Bereich der Dichtung umspritzt. Dadurch wird grundsätzlich eine gute Abdichtung des Behälters an der Öffnung für die Kontaktstifte erzielt, jedoch kann es vorkommen, dass sich die Kontaktstifte insbesondere durch Vibrationen des Behälters bewegen können und vom Behälter lösen.

Als Alternative dazu können die Kontaktstifte in die Wand eines bereits gefertigten Behälters eingelegt werden. Dazu wird um die Kontaktstifte jeweils eine Dichtung angebracht und die Kontaktstifte im Bereich der Dichtung mit einer Vorumspritzung versehen, die die Dichtung verpresst. Anschließend wird der umspritzte Kontaktstift in einer Öffnung des Behälters so eingesetzt, dass die Dichtung mit dem Kontaktstift die Öffnung abdichtet. Hier ist der Nachteil festzustellen, dass die Herstellung viele Schritte, insbesondere mehrere Spritzgussschritte, umfasst, so dass die Herstellung eines entsprechenden Behälters mit Kontaktstifte aufwendig ist. Des Weiteren sind eine gesicherte Abdichtung des Behälters mit den Kontaktstiften und eine feste Positionierung der Kontaktstifte nicht gewährleistet.

Die deutsche Patentanmeldung DE 10 2006 005 529 A1 betrifft einen Behälter mit Elektroden, wobei die Elektroden aus einem leitfähigen Kunststoff hergestellt sind. Bei der Herstellung des Behälterkörpers werden Diffusions- und/ oder Verschmelzungsvorgänge zwischen den Elektroden und dem Behälter ausgelöst, so dass auf eine Dichtung verzichtet werden kann.

Ein entsprechender Behälter mit derartigen Elektroden scheint jedoch in der Konstruktion, insbesondere in der Materialwahl, aufwendig und komplex zu sein, da die Elektroden aus Kunststoffmaterial hergestellt sind, die zudem auch noch leitfähig sein müssen. Um einen Diffusionsbereich bzw. einen Verschmelzungsbereich zwischen den Elektroden und der Wand des Behälters zu schaffen, müssen sowohl die Elektroden als auch der Behälter aus einem geeigneten und zusammenpassenden Kunststoffmaterial hergestellt sein, wobei das Diffundieren bzw. Verschmelzen nicht einfach zu realisieren ist sowie die Herstellparameter nicht einfach genau festzulegen sind. Deshalb ist auch hier die Herstellung sehr komplex. Weiterhin ist die Verbindung zwischen dem Behälter und den Elektroden nicht sicher, da das Material des Behälters, beispielsweise beim Spritzgießen, nicht zu heiß sein darf, um ein eventuelles aufschmelzen der Kunststoffelektroden zu vermeiden. Im Fall eines Aufschmelzens könnte die Elektrode unzureichende und schlechte Messsignale liefern. Deshalb ist auch eine sichere Verbindung nicht möglich und die Elektroden können sich im Betrieb durch Störungen und/ oder Vibrationen lösen und unter Umständen aus dem Behälter herausfallen. Darüber hinaus ist nicht gewährleistet, dass eine ausreichende Abdichtung des Behälters zur Elektrode durch die Diffusion bzw. Verschmelzung insbesondere nach einem längeren Einsatz eingehalten wird.

Die Druckschrift DE 2452492 A1 offenbart eine Sonde für eine elektrische Flüssigkeitsmessanordnung, wobei eine Lagerfläche der Sonde unter der einschnürenden Wirkung einer zylindrischen Öffnungswandung radial zusammengedrückt wird.

Die Druckschrift DE 8321845 U1 zeigt ein elastisches Befestigungselement mit mindestens zwei abgewinkelten Abschnitten mit jeweils einem Haken.

Die US-Patentschrift 3 666 903 zeigt einen Detektor zur Ermittlung des Flüssigkeitsstandes in einem Hauptzylinder, der seitlich in dem Hauptzylinder angeordnet ist.

Die Druckschrift EP 2113068 A1 offenbart eine Vorrichtung zum Messen des Volumen- oder Massestroms eines Mediums in einer Rohrleitung, wobei eine Messelektrode mit einem Klemmkeil an einem Messrohr befestigt wird.

Die Druckschrift DE 10116509 A1 offenbart einen selbsthaltenden Getriebesensor mit einem Sensorgehäuse mit einem Haltering, der sich radial von dem Sensorgehäuse erstreckt. Der Durchmesser einer Bohrung ist geringfügig kleiner als der Durchmesser des Halterings.

Die DE 102004062087 A1 zeigt eine Befestigungsvorrichtung eines Sensors mit einem Gehäuse und einem Klemmelement, welches sich in axialer Richtung seitlich entlang des Sensorgehäuses erstreckt und mit diesem kraftschlüssig verbunden ist.

### AUFGABE DER ERFINDUNG

Ausgehend von diesem Stand der Technik ist es eine Aufgabe der vorliegenden Erfindung, einen Kontaktstift für einen Behälter, einen Behälter, und ein Herstellverfahren für einen Behälter sowie für einen Kontaktstift bereit zu stellen, womit die Nachteile des Standes der Technik behoben werden können und ein Kontaktstift bzw. eine Elektrode in einem Behälter sicher und abgedichtet positioniert werden kann.

### TECHNISCHE LÖSUNG

Diese Aufgabe wird durch einen Kontaktstift nach Anspruch 1, durch einen Behälter nach Anspruch 6 sowie durch ein Herstellverfahren nach Anspruch 8 gelöst. Vorteilhafte Ausführungsformen der Erfindung ergeben sich aus den Merkmalen der abhängigen Ansprüche.

Ein erfindungsgemäßer Kontaktstift für einen Behälter, insbesondere einen Kühlwasserbehälter, umfasst einen Hauptkörper mit einer Längsachse, ein erstes Ende und ein zweites Ende, wobei das erste Ende zur Abnahme von Messsignalen und das zweite Ende als Messelektrode ausgebildet ist. Der Kontaktstift weist zwischen dem ersten Ende und dem zweiten Ende wenigstens ein Element zur Befestigung, Positionierung und/ oder Sicherung des Kontaktstifts am Behälter auf. Das zweite Ende dient als Elektrode und das erste Ende dient zur Abgabe der am zweiten Ende detektierten Messgrößen. Am zweiten Ende können die Messgrößen an beispielsweise ein Gerät oder an eine Vorrichtung zur Weiterverarbeitung ab-/weitergeleitet werden. Das erste Ende kann dementsprechend zum Abgreifen von Signalen ausgebildet sein.

Weiterhin ist zwischen dem ersten Ende und dem zweiten Ende wenigstens ein Element zur Befestigung, Positionierung und/ oder Sicherung des Kontaktstifts an den Behälter vorgesehen. Mit einem solchen Element zur Befestigung, Positionierung und/ oder Sicherung (Festhalteelement) kann der Kontaktstift am Behälter positioniert werden, so dass der Kontaktstift beim Einsatz nicht durch beispielsweise Vibrationen und/ oder Wärmeausdehnungen gelockert wird, sich relativ zum Behälter bewegt oder sogar ablöst. Das Element ist zum Einhaken bzw. Verkrallen des Kontaktstifts in einer bestimmten Position am Kühlwasserbehälter ausgebildet und weist wenigstens einen Widerhaken auf.

Das Rohmaterial des Kontaktstifts kann ein Metall sein. Hinsichtlich der Materialverträglichkeit mit beispielsweise einem Kühlwasserbehälter oder den zu messenden Prüflingen, insbesondere hinsichtlich der Beständigkeit gegenüber einer Reihe von Stoffen, kann vorgesehen sein, dass der Kontaktstift aus Edelstahl oder einem Edelmetall, wie Kupfer, Silber oder Gold, hergestellt ist. Somit kann der Kontaktstift auch in einen Behälter eingesetzt werden, der unter Anderem zur Aufnahme von Schmierstoffen und Lösungen vorgesehen ist.

Der Kontaktstift ist in eine eigens dafür am Behälter vorgesehene Öffnung eingebracht.

Entsprechend findet das Einhaken bzw. Verkrallen an der Innenwand der Öffnung statt. Es ist jedoch auch möglich, dass das Element zur Befestigung, Positionierung und/ oder Sicherung sich an wenigstens einem Rand, vorzugsweise an einem inneren Rand und/ oder einem äußeren Rand der Öffnung einhakt, um den Kontaktstift gegen eine Bewegung und ein Lösen vom Behälter zu sichern. Zusätzlich kann auch vorgesehen sein, dass der Behälter Flansche und/ oder Nuten aufweist, in die entsprechende Festhalteelemente des Kontaktstifts eingreifen, um in einer gesicherten bzw. positionierten Verbindung mit dem Behälter gehalten zu werden.

Es ist aber auch möglich, dass das Einhaken bzw. Verkrallen sowohl durch ein starres als auch durch ein flexibles Element zur Befestigung, Positionierung und/ oder Sicherung durchgeführt werden kann.

Weiterhin kann die Verbindung durch Verkanten als Unterbegriff zu Einhaken angesehen werden, da auch hier wenigstens zwei Teilelemente, nämlich ein Festhalteelement des Kontaktstifts und beispielsweise eine Nut der Öffnung des Behälters im Wesentlichen ineinander eingehakt sind. Dazu kann der Kontaktstift schräg in die Öffnung des Behälter eingesetzt werden, wobei das Element zur Befestigung, Positionierung und/ oder Sicherung in eine in der Öffnung ausgebildete Nut eingreift.

Insbesondere bei der Verwendung eines flexiblen Bauteils bzw. Elements, beispielsweise im Bereich der Öffnung des Behälters und/ oder als Element zur Befestigung, Positionierung und/ oder Sicherung, kann eine gesicherte Positionierung des Kontaktstifts durch Verspannen hergestellt werden. So kann beispielsweise die Öffnung zumindest bereichsweise einen kleineren Öffnungsquerschnitt aufweisen als zumindest bereichsweise der Kontaktstift (oder umgekehrt), so dass der Kontaktstift beim Einführen in die Öffnung eingeklemmt wird. Bei einer alternativen Ausgestaltung weist der Kontaktstift flexible bzw. elastische Elemente, wie elastische Sicherungsbolzen und/ oder Flansche, auf, die an der Wand der Öffnung komprimiert zum Anliegen kommen. Natürlich können flexible/ elastische Elemente auch an der Innenseite der Öffnung ausgebildet sein.

Das Element zum Einhaken bzw. Verkrallen erstreckt sich von der Längsachse des Hauptkörpers weg. Somit kann trotz einer Minimierung des Materialbedarfs gute Haftreibung bzw. ein Einhaken/ Verkrallen des Kontaktstifts am Behälter erzielt werden.

Dies kann weiterhin gefördert werden, indem beispielsweise das Element zur Befestigung, Positionierung und/ oder Sicherung des Kontaktstifts an der Innenseite des Behälters anliegt und die Innenseite zusätzlich eine raue Oberflächenstruktur aufweist oder aus einem relativ weichen, flexiblen und/ oder elastischen Material beschaffen ist. Es können auch im Bereich der Verkrallung geometrische Profile vorhanden sein, die ein Verkrallen begünstigen, z. B. Vorsprünge oder Stege.

Weiterhin kann ein Endabschnitt des Elements zum Einhaken bzw. Verkrallen in Richtung des ersten Endes des Kontaktstifts ausgerichtet sein. Somit wäre ein Einbringen des Kontaktstifts in eine Öffnung des Behälters von dessen Außenseite leicht möglich, da die äußere, flache, vorzugsweise glatte, Seite des Elements zum Einhakens an der Innenwand der Öffnung anliegt bzw. an dieser während des Einführens des Kontaktstabes in die Öffnung entlang gleitet. Der Endabschnitt des Festhalteelements bildet vorzugsweise eine Spitze, die sich beim Versuch, das Festhalteelement zu entfernen, aufgrund der Ausrichtung gegen die Innenwand der Öffnung spreizt, Somit wirkt das Element zur Befestigung, Positionierung und/ oder Sicherung einer Kraft zum Entfernen des Kontaktstifts entgegen.

Eine Ausführungsform kann vorsehen, dass der Kontaktstift am ersten Ende, vorzugsweise im Bereich des Elements zum Befestigen, Positionieren und/ oder Sichern flach bzw. als Fahne ausgebildet ist. Durch diese Ausgestaltung lässt sich das Element zur Befestigung, Positionierung und/ oder Sicherung in einfacher Art und Weise am Kontaktstift ausformen bzw. anbringen. Es kann sich in der Ebene des flachen bzw. als Fahne ausgebildeten Bereichs von der Längsachse weg erstrecken, so dass der Kontaktstift nicht über seinen gesamten möglichen Umfang in der Öffnung des Behälters gesichert ist. Somit kann Material eingespart werden.

Das zweite Ende, insbesondere der Bereich des Festhalteelements kann beispielsweise durch Prägen des Kontaktstifts hergestellt werden, so dass schließlich der Bereich zwar flacher (weniger tief) als der Hauptkörper ist, jedoch eine größere Breite (senkrecht zur Längsachse und zur Tiefe) aufweist. Auch hier wäre ein Materialersparnis zu verzeichnen. Das Element zur Befestigung, Positionierung und/ oder Sicherung selbst kann schließlich an den flachen bzw. als Fahne geformten Bereich, beispielsweise mittels einer Präge, Stanze, eines Gesenks, eines Meißels oder eines Messers, geprägt, angeprägt oder gestanzt werden. Dieser Bearbeitungsschritt kann auf Grund des flachen Bereichs genauer und einfacher durchgeführt werden. Es ist dabei möglich, das Festhalteelement bereits während des Schritts zur Formgebung des Bereichs des Festhalteelements gleichzeitig durchzuführen. Alternativ dazu kann der Kontaktstift mit dem Festhalteelement durch ein Gießverfahren hergestellt werden, so dass durch das Gussformgebungsverfahren bereits das Festhalteelement am Kontaktstift ausgebildet ist.

Somit kann beispielsweise der Kontaktstift aus einem runden, drahtartigen Rohling hergestellt werden. Der Rohling wird dabei abgelängt, an einem Bereich am ersten Ende gepresst bzw. geprägt und schließlich das wenigstens eine Element zur Befestigung, Positionierung und/ oder Sicherung an dem gepressten bzw. geprägten Bereich angeprägt.

Des Weiteren kann der flache bzw. als Fahne ausgebildete Bereich am ersten Ende einen Steckerbereich aufweisen, an dem eine Leitung beispielsweise durch Löten, durch einen Stecker oder einen Kabelschuh angebracht wird. Natürlich ist es auch möglich, dass der Steckerbereich eine andere beliebige Form bzw. Querschnittsfläche aufweist. Der Bereich für das Element zur Befestigung, Positionierung und/ oder Sicherung, der Steckerbereich und/ oder der Hauptkörper können die gleiche oder unterschiedliche Formen aufweisen. Jedoch können die einzelnen Abschnitte des Kontaktstifts gleich (in gleicher Dimension und/ oder Form) ausgebildet sein und als einheitliche Bereiche betrachtet werden.

Weiterhin kann auch vorgesehen sein, dass das zweite Ende eine Spitze aufweist. Dies ermöglicht ein leichtes Einführen des zweiten Endes des Kontaktstifts in den Behälter, insbesondere wenn beispielsweise noch keine Öffnung vorhanden ist oder die Öffnung zumindest bereichsweise einen sich verjüngenden Querschnitt aufweist. In diesem Fall kann beim Einbau in den Behälter durch die spitze Ausführung zusätzlich eine Zentrierung des Kontaktstifts durchgeführt werden.

Eine Ausführung kann eine Dichtung am Kontaktstift vorsehen. Diese Dichtung kann beispielsweise ein O-Ring, Silikon, ein Dichtungsgewebe, wie z. B. Hanf, oder ein Dichtungsband sein. Die Dichtung dient zum Abdichten des Behälters gegenüber der Öffnung. Um die Dichtung am Kontaktstift zu fixieren, kann der Kontaktstift ein oder mehrere Halteelemente aufweisen. Die Halteelemente können beispielsweise eine Wulst, eine Vertiefung, eine Auswölbung oder ein Bolzen sein, die sich senkrecht zur Längsachse des Kontaktstifts erstrecken.

Das Element zur Befestigung, Positionierung und/ oder Sicherung, das Haltelement, der Steckerbereich und der Hauptkörper, sowie das erste Ende und das zweite Ende können einteilig oder mehrteilig mit/ am Kontaktstift ausgeführt sein, so dass beispielsweise das Element zur Befestigung, Positionierung und/ oder Sicherung am ersten Ende beispielsweise durch Kleben oder Schweißen angebracht wird. Dabei können die einzelnen Bauteile/ Baugruppen/ Bereich aus gleichen oder unterschiedlichen Materialien, insbesondere Metallen wie z. B. Edelstahl, hergestellt sein.

Ein Behälter gemäß der Erfindung weist eine Wand zur Begrenzung des Innenraums des Behälters, einen Kontaktstift bzw. eine Elektrode wie oben beschrieben, und eine Öffnung auf. Durch die Öffnung ragt wenigsten ein Abschnitt des Kontaktstifts in den Innenraum des Behälters, so dass der Kontaktstift in den Innenraum ragt. Der Kontaktstift ist durch Verkrallen, Verkanten und/ oder Verhaken am Behälter befestigt. Durch eine derartige Befestigung wird ein Lösen des Kontaktstifts aus der Öffnung des Behälters verhindert, so dass der Behälter problemlos auch mit Vibrationen beaufschlagt werden kann, ohne dass sich dadurch der Kontaktstift aus der Position löst. Der Kontaktstift kann wie oben ausgeführt ausgebildet sein.

In einer Ausführungsform des Behälters kann dieser eine Dichtung umfassen, die zur Abdichtung der Öffnung am Kontaktstift angeordnet ist.

Weiterhin kann sich der Hauptkörper des Kontaktstifts durch die Dichtung erstrecken, so dass zwischen dem Hauptkörper und der Innenwand der Öffnung des Behälters die Dichtung liegt, insbesondere eingeklemmt ist. Ein Element zur Befestigung, Positionierung und/ oder Sicherung des Kontaktstifts steht mit der Innenwand der Öffnung so in Eingriff, dass ein Bewegen, insbesondere ein Entfernen des Kontaktstifts, verhindert wird.

Das Herstellverfahren für einen Behälter, insbesondere einen Kühlwasserbehälter, umfasst die folgenden Schritte:
a) Bereitstellen eines Kontaktstifts wie oben beschrieben; und
b) Einführen wenigstens eines Teils des Kontaktstifts in eine Öffnung des Behälters, wobei ein Element zur Befestigung, Positionierung und/ oder Sicherung verspannt wird und sich in einer Endposition mit dem Behälter verhakt bzw. verkrallt.

Durch das Verhaken bzw. Verkrallen kann der Kontaktstift gegenüber dem Behälter gesichert positioniert werden, ohne sich aus seiner Positionierung zu lösen.

Das Element zur Befestigung, Positionierung und/ oder Sicherung am Kontaktstift kann während des Bereitstellens des Kontaktstifts beispielsweise durch Prägen oder Anprägen ausgebildet bzw. angeordnet werden.

Weiterhin kann vor dem Einführen des Kontaktstifts eine Dichtung im Bereich der Öffnung, angebracht werden. Beim Einführen des Kontaktstifts wird dieser, beispielsweise im Falle eines O-Rings, durch die Öffnung des O-Rings in die Öffnung des Behälters eingeführt. Somit lässt sich die Herstellung des Behälters mit einem Kontaktstift und einer Dichtung auf einfache Weise durchführen.

Ein erfindungsgemäßer Behälter kann somit beispielsweise durch folgende Schritte hergestellt werden:
a) Bereitstellen eines Kontaktstifts
   a. Ablängen eines Rohmaterials, beispielsweise eines Drahts;
   b. Anspitzen eines Endes (zweites Ende);
   c. Prägen des anderen Endes (erstes Ende), um einen flachen Bereich auszubilden;
   d. Anbringen von seitlichen Widerhaken durch Anprägen
b) Anfertigen eines Behälters mit einer Öffnung;
c) Einlegen eines O-Rings in die Öffnung;
d) (Online-)Montage des Kontaktstifts in die Öffnung durch die Dichtung; und
e) Automatisches Verkrallen des Kontaktstifts an der Innenwand der Öffnung durch die Widerhaken.

Es ist somit möglich, Behälter und Kontaktstift gleichzeitig herzustellen und direkt im Anschluss den Kontaktstift in die Öffnung einzubringen. Eine Berücksichtigung verschiedener Verarbeitungs- und Herstellungsmethoden des Behälters und des Kontaktstifts sowie der Prozessparameter ist nicht notwendig, so dass das Herstellungsverfahren einfacher gestaltet ist. Ein Abdichten und Zentrieren des Kontaktstifts und dessen gerade Einführung ist gesichert, wobei nach dem Einführen dessen Position fixiert ist. Durch eine geeignete Ausführung des Elements zur Befestigung, Positionierung und/ oder Sicherung kann ein Lösen des Kontaktstifts aus der Öffnung des Behälters verhindert werden.

Die Abdichtung kann durch einen radial abdichtenden O-Ring erfolgen, der in eine Öffnung in der Behälterwand eingebracht wird. Der Kontaktstift wird durch die Öffnung in der Behälterwand hindurch geführt. Widerhaken an den Kontaktstiften verhaken im Kunststoff der Behälterwand oberhalb des in die Öffnung eingelegten O-Rings. Dabei können Auszugkräfte von ca. 100 N realisiert werden.

### KURZE BESCHREIBUNG DER FIGUREN

Weitere Merkmale und Vorteile der Erfindung werden aus der nachfolgenden Beschreibung bevorzugter Ausführungsbeispiele anhand der Figuren deutlich. Es zeigen:
- Fig. 1: eine Draufsicht auf einen Kontaktstift gemäß der Erfindung;
- Fig. 2: eine Seitenansicht des Kontaktstifts aus Fig. 1;
- Fig. 3: eine perspektivische Darstellung des Kontaktstifts aus Fig. 1;
- Fig. 4: eine schematische Darstellung eines Behälters mit einem Kontaktstift gemäß der Erfindung; und
- Fig. 5: eine schematische Darstellung des Behälter aus Fig. 4 im Detail.

### DETAILLIERTE BESCHREIBUNG BEVORZUGTER AUSFÜHRUNGSBEISPIELE

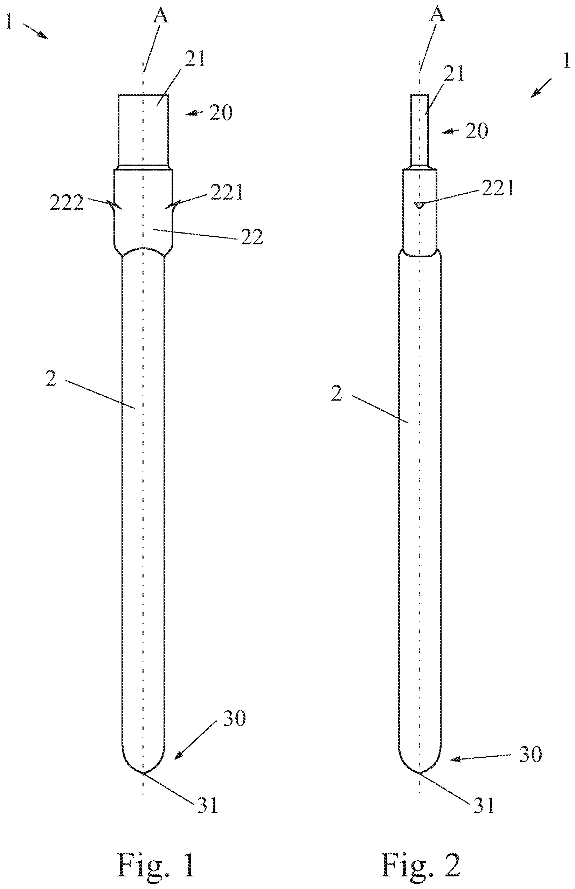

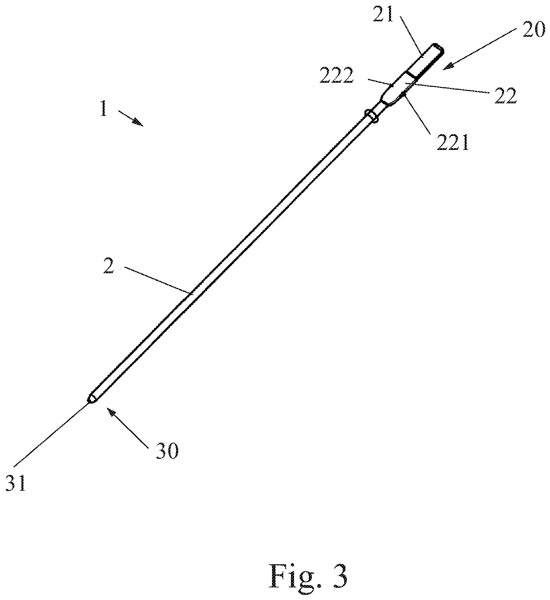

Die Figuren 1 bis 3 zeigen ein Ausführungsbeispiel eines erfindungsgemäßen Kontaktstifts. Der Kontaktstift 1 umfasst einen Hauptkörper 2, der länglich entlang seiner Längsachse A ausgebildet ist, ein erstes Ende 20, und ein zweites Ende 30. In diesem Ausführungsbeispiel ist das zweite Ende 30 als spitzes Ende mit einer Spitze 31 ausgeführt. Weiterhin weist der Hauptkörper 2 in diesem Ausführungsbeispiel eine runde Querschnittsfläche auf.

Das erste Ende 20 unterscheidet sich in seiner Querschnittsfläche vom Hauptkörper 2 und ist flach ausgeführt, so dass das erste Ende 20 einen annähernd quaderförmigen Abschnitt am Kontaktstift 1 bildet. Das erste Ende 20 weist zudem einen Kontaktbereich 21 und einen Festhaltebereich 22 auf. Mit dem Kontaktbereich 21 können vom zweiten Ende 30 aufgenommene bzw. empfangene Signale bzw. Messrohdaten an weitere Geräte zum Auswerten der Signale bzw. Daten weitergeleitet werden. Dazu ist in diesem Ausführungsbeispiel der Kontaktbereich 21 als Kontaktfahne ausgeführt, um beispielsweise durch eine Klemme, einen Kabelschuh oder einen Stecker die Daten bzw. Signale abzugreifen. Je nach gewünschter Kontaktierungsart kann der Kontaktbereich 21 auch von der Quaderform abweichen und zylindrisch, vieleckig und/oder hohl ausgeführt sein bzw. einen Verbindungsmechanismus, wie z. B. eine Klemme, aufweisen. Auch der Festhaltebereich 22 kann grundsätzlich dieselbe Form wie der Kontaktbereich 21 oder eine unterschiedliche Form aufweisen, und ist nicht auf die Quaderform beschränkt.

Der Festhaltebereich 22 ist am ersten Ende 20 angeordnet, befindet sich zwischen dem Kontaktbereich 21 und dem zweiten Ende 30, und weist einen ersten Widerhaken 221 und einen zweiten Widerhaken 222 auf. Die beiden Widerhaken 221, 222 ragen vom Festhaltebereich 22 weg und weisen jeweils ein spitzes Ende auf, das vom Festhaltebereich 22 weg gerichtet ist, jedoch in einem Winkel zum ersten Ende 20 ausgerichtet ist. Die Widerhaken 221, 222 erstrecken sich in entgegengesetzter Richtung (symmetrisch) von der Längsachse des Hauptkörpers 2 weg.

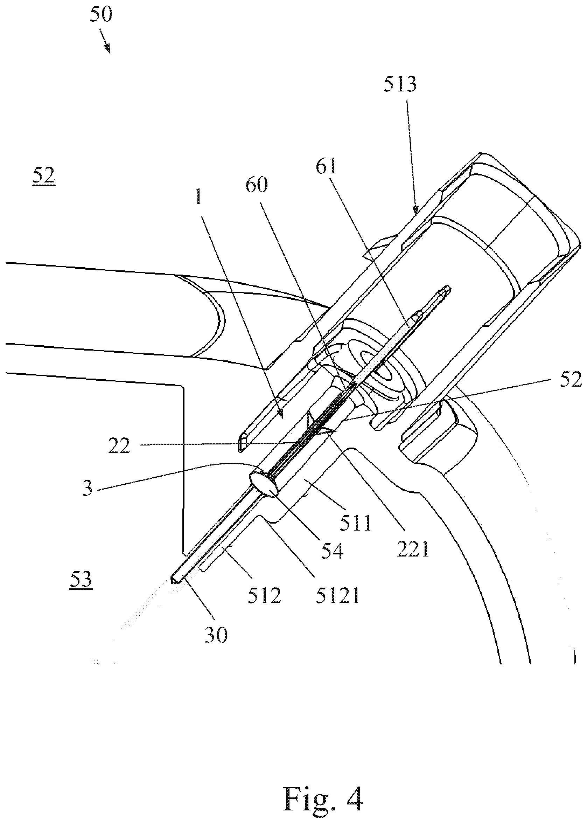

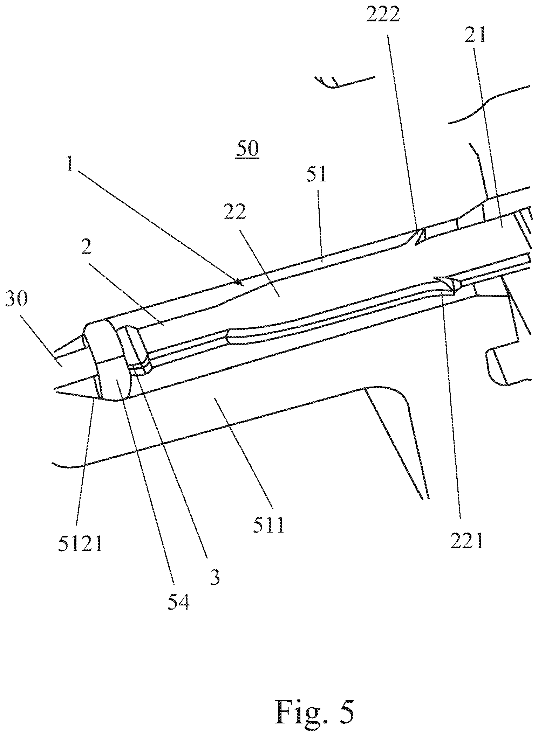

Nachfolgend wird zusätzlich auf die Figuren 4 und 5 verwiesen, die den Kontaktstift 1 beim Einsatz in einem Behälter 50 darstellen.

Wie aus den Figuren 4 und 5 ersichtlich ist, weist der Behälter 50 eine Öffnung 51 mit einem äußeren Kragen 511 und einen inneren Kragen 512 auf, die sich vom Rand des Behälters 50 in diesen hinein erstrecken. Durch den äußeren Kragen 511 und inneren Kragen 512 weist die Öffnung einen nach innen sich verjüngenden Querschnitt auf. An der Stelle des Übergangs von dem äußeren Kragen 511 zum inneren Kragen 512 befindet sich am inneren Kragen ein Flansch 5121. Die Öffnung 51 verbindet den Außenraum 52 des Behälters 50 mit seinem Innenraum 53. In die Öffnung 50 ist ein O-Ring 54 als Dichtung eingelegt, der sich zum Innenraum 53 des Behälters 50 am Flansch 5121 des inneren Kragens 512 abstützt. Weiterhin weist der Behälter 50 an der Öffnung 51 einen Öffnungsrand 513 auf, der sich vom Behälter 50 nach außen weg erstreckt und die Öffnung 51 wie eine Hülse umgibt.

In die Öffnung 51 des Behälters 50 ist der Kontaktstift 1 so eingeführt, dass das zweite Ende 30 durch den inneren Kragen 512 in den Innenraum 53 des Behälters 50 ragt. Dabei befindet sich der O-Ring 54 zwischen dem zweiten Ende 30 und dem Festhaltebereich 22, so dass der O-Ring 54 den Behälter 50 abdichtet. Der Festhaltebereich 22 liegt benachbart zum äußeren Kragen 511, wobei die Widerhaken 221, 222 den Kontaktstift an der Innenwand des äußeren Kragens 511 arretieren. Die Widerhaken 221, 222 sind in dieser Ausführungsform zudem mit einem Ende spitz zum inneren Kragen 511 und zum Außenraum 52 bzw. zum Kontaktbereich 21 des Kontaktstifts 1 ausgerichtet, so dass die Widerhaken 221, 222 ein leichtgängiges Einführen des Kontaktstifts 1 in die Öffnung 51 ermöglichen, jedoch ein Entfernen des Kontaktstifts 1 aus der Öffnung 51 zum Außenraum 52 verhindern. Bei einer elastischen bzw. nachgiebigen Ausbildung der Widerhaken 221, 222 kann das Einbringen des Kontaktstifts 1 in die Öffnung 51 begünstigt werden, da sich die Widerhaken 221, 222 an den Hauptkörper 2 bzw. an den Festhaltebereich 22 anlegen können, jedoch beim Versuch eines Entfernens des Kontaktstifts 1 aus der Öffnung 51 mit der Innenwandung des äußeren Kragens 512 verhaken und somit einem Entfernen entgegen wirken.

Wie insbesondere aus der Figur 4 ersichtlich ist, ist am Kontaktbereich 21 des Kontaktstifts 1 ein Stecker 60 angebracht. Durch den Stecker 60 ist am ersten Ende 20 eine Verbindungsleitung 61 angekoppelt, so dass das zweite Ende 30 des Kontaktstifts mit einem weiteren Gerät (nicht dargestellt) verbunden werden kann.

Durch den O-Ring 54 wird die Öffnung 51 des Behälters 50 zum Kontaktstift 1 und damit nach außen hin abgedichtet. Damit der O-Ring 54 sich nicht entlang des Hauptkörpers 2 verschiebt, weist der Hauptkörper ein Halteelement 3 (s. Fig. 4 und 5) auf, das eine Bewegung des O-Rings 54 zum ersten Ende 20 hin verhindert. Weiterhin wird durch das Einbringen des Kontaktstifts 1 in die Öffnung 51 des Behälters 50 der O-Ring 51 zwischen dem Flansch 5121 des inneren Kragens 512 und der Sicherungsauswölbung 3 festgeklemmt, wobei ein Lösen der Verklemmung durch die Widerhaken 221, 222 verhindert wird.

Ist die Innenwand der Öffnung 51 aus einem weichen, flexiblen oder elastischen Material hergestellt, kann der Kontaktstift 1am Behälter 50 positioniert bzw. gesichert werden, indem, wie in Figur 5 dargestellt, die Widerhaken 221, 222 in das Material eindringen.

In dem beschriebenen Ausführungsbeispiel ist beim Einbauen des Kontaktstifts 1 in den Behälter 50 der O-Ring 54 bereits an der Öffnung 51 positioniert. Es ist jedoch grundsätzlich auch möglich, den O-Ring 54 zuerst am Kontaktstift 1, beispielsweise durch Aufstecken, anzubringen und anschließend den Kontaktstift 1 mit dem O-Ring 54 in die Öffnung 51 einzuführen.

Ein eventuelles Zentrieren des Kontaktstifts 1 hinsichtlich des O-Rings 54 wird durch die Spitze 31 des zweiten Endes 30 und/ oder einer runden Querschnittsfläche des Hauptkörpers 2, insbesondere des zweiten Endes 30, bzw. einer runden oder konischen Ausgestaltung der Halteelement 3, bewerkstelligt.

Obwohl die vorliegende Erfindung anhand der beigefügten Ausführungsbeispiele detailliert beschrieben worden ist, ist es für den Fachmann selbstverständlich, dass die Erfindung nicht auf diese Ausführungsformen beschränkt ist, sondern im Rahmen der beigefügten Ansprüche Abwandlungen oder Änderungen umfasst, wobei die Änderungen durch unterschiedliche Kombination einzelner dargestellter Merkmale als auch durch Weglassen einzelner Merkmale erfolgen können. Insbesondere ist jegliche Kombination einzelner dargestellter Merkmale von der Erfindung umfasst.

### BEZUGSZEICHENLISTE

- 1: Kontaktstift
- 2: Hauptkörper
- 3: Halteelement
- 20: erstes Ende
- 21: Kontaktbereich
- 22: Festhaltebereich
- 30: zweites Ende
- 31: Spitze
- 50: Behälter
- 51: Öffnung
- 52: Außenraum
- 53: Innenraum
- 54: O-Ring
- 60: Stecker
- 61: Verbindungsleitung
- 221: erster Widerhaken
- 222: zweiter Widerhaken
- 511: äußerer Kragen
- 512: innerer Kragen
- 513: Öffnungsrand
- 5121: Flansch

## Patentansprüche

1. Kontaktstift (1) für einen Behälter (50), insbesondere einen Kühlwasserbehälter, wobei der Kontaktstift (1) einen Hauptkörper (2) mit einer Längsachse, ein erstes Ende (20) und ein zweites Ende (30) aufweist, wobei das erste Ende (20) zur Abnahme von Messsignalen und das zweite Ende (30) als Messelektrode ausgebildet ist
wobei der Hauptkörper des Kontaktstifts (1) zwischen dem ersten Ende (20) und dem zweiten Ende (30) einen Festhaltebereich (22) aufweist, welcher wenigstens ein Element zur Befestigung, Positionierung und/ oder Sicherung (221, 222) des Kontaktstifts (1) an einem Behälter (50) aufweist, wobei der Behälter (50) eine Öffnung (51) mit einem äußeren Kragen (511) aufweist, und wobei das Element zur Befestigung, Positionierung und/ oder Sicherung (221, 222) zum Einhaken bzw. Verkrallen des Kontaktstifts (1) an einer Innenwand des äußeren Kragens (511) ausgebildet ist und wenigstens einen Widerhaken aufweist, und wobei das Element zur Befestigung, Positionierung und/ oder Sicherung (221, 222) und der Hauptkörper (2) des Kontaktstifts (1) einteilig ausgebildet sind.

2. Kontaktstift (1) nach Anspruch 1,
**dadurch gekennzeichnet, dass**
sich das Element zur Befestigung, Positionierung und/ oder Sicherung (221, 222) von der Längsachse des Hauptkörpers weg erstreckt und/ oder der Endabschnitt des Elements zur Befestigung, Positionierung und/ oder Sicherung (221, 222) in Richtung des ersten Endes des Kontaktstifts (1) gerichtet ist.

3. Kontaktstift (1) nach einem der vorhergehenden Ansprüche,
**dadurch gekennzeichnet, dass**
der Kontaktstift (1) wenigstens im Bereich des Elements zur Befestigung, Positionierung und/ oder Sicherung (22) flach bzw. als Fahne ausgebildet ist.

4. Kontaktstift (1) nach einem der vorhergehenden Ansprüche,
**dadurch gekennzeichnet, dass**
sich das Element zur Befestigung, Positionierung und/ oder Sicherung (221, 222) in der Ebene des flachen bzw. als Fahne ausgebildeten Bereichs (22) von der Längsachse weg erstreckt.

5. Kontaktstift (1) nach einem der vorhergehenden Ansprüche,
**dadurch gekennzeichnet, dass**
der Kontaktstift (1) in einem Bereich zwischen dem Element zur Befestigung, Positionierung und/ oder Sicherung (221, 222) und dem zweiten Ende des Kontaktstabs wenigstens ein Halteelement (3) zum Fixieren einer Dichtung (54) am Behälter (50) aufweist.

6. Behälter (50), insbesondere Kühlwasserbehälter, umfassend
eine Wand zur Begrenzung eines Innenraums (53) des Behälters (54); und
eine Öffnung (51) mit einem äußeren Kragen (511) aufweist, durch die wenigstens ein Abschnitt des Kontaktstifts (1) in den Innenraum des Behälters (50) ragt,
**dadurch gekennzeichnet, dass**
der Behälter (50) einen Kontaktstift (1) nach einem der vorhergehenden Ansprüche umfasst, der mittels Verkrallen, Verkanten und/oder Verhaken an einer Innenwand des äußeren Kragens (511) befestigt ist.

7. Behälter (50) nach Anspruch 6,
**dadurch gekennzeichnet, dass**
der Behälter eine Dichtung (54) umfasst, die zur Abdichtung der Öffnung (51) am Kontaktstift (1) angeordnet ist.

8. Herstellverfahren für einen Behälter (50), insbesondere nach einem der Ansprüche 6 oder 7,
**gekennzeichnet durch die Schritte:**
a. Bereitstellen eines Kontaktstifts (1) nach einem der Ansprüche 1 bis 7, und
b. Einführen wenigstens eines Teils des Kontaktstifts (1) in die Öffnung (51), wobei das Element zur Befestigung, Positionierung und/ oder Sicherung (221, 222) verspannt wird, um sich in der Endposition mit dem Behälter (50) zu verhaken bzw. zu verkrallen.

9. Herstellverfahren für einen Behälter (50) nach Anspruch 8, wobei der Schritt a) umfasst: Ausbilden bzw. Anordnen wenigstens eines Elements zur Befestigung, Positionierung und/ oder Sicherung (221, 222) am Kontaktstift (1), insbesondere mittels Prägens, Anprägens oder Stanzens.

10. Herstellverfahren für einen Behälter nach einem der Ansprüche 8 oder 9, wobei das Verfahren vor der Durchführung des Schritts b) ein Anordnen einer Dichtung (54) im Bereich der Öffnung (51) und/oder am Kontaktstift (1) umfasst.

## Claims

1. A contact pin (1) for a container (50), in particular for a cooling water container, wherein the contact pin (1) has a main body (2) with a longitudinal axis, a first end (20) and a second end (30), wherein the first end (20) is configured for taking measurement signals and the second end (30) is configured as a measuring electrode, wherein the main body of the contact pin (1) has a retaining region (22) between the first end (20) and the second end (30), which has at least one element for fastening, positioning and / or securing (221, 222) the contact pin (1) at a container (50), wherein the container (50) has an opening (51) with an outer collar (511), and wherein the element for fastening, positioning and / or securing (221, 222) is formed for hooking or clawing the contact pin (1) on an inner wall of the outer collar (511), and has at least one barb, and wherein the element for fastening, positioning and / or securing (221, 222) and the main body (2) of the contact pin (1) are formed in one piece.

2. The contact pin (1) according to claim 1,
**characterized in that**
the element for fastening, positioning and / or securing (221, 222) extends away from the longitudinal axis of the main body and / or the end portion of the element for fastening, positioning and / or securing (221, 222) towards the first end of the contact pin (1).

3. The contact pin (1) according to one of the preceding claims,
**characterized in that**
the contact pin (1) is formed flat at least in the region of the element for fastening, positioning and / or securing (22) or as a flag.

4. The contact pin (1) according to one of the preceding claims,
**characterized in that**
the element for fastening, positioning and / or securing (221, 222) extends away from the longitudinal axis in the plane of the flat or flag-like formed portion (22).

5. The contact pin (1) according to one of the preceding claims,
**characterized in that**
the contact pin (1) has at least one retaining element (3) for fixing a seal (54) to the container (50) in a region between the element for fastening, positioning and / or securing (221, 222) and the second end of the contact pin.

6. A container (50), in particular a cooling water tank, comprising
a wall for enclosing an interior (53) of the container (54); and
an opening (51) with an outer collar (511) through which at least a portion of the contact pin (1) projects into the interior of the container (50),
**characterized in that**
the container (50) comprises a contact pin (1) according to one of the preceding claims, which is fastened by means of clawing, tilting and / or hooking to an inner wall of the outer collar (511).

7. The container (50) according to claim 6,
**characterized in that**
the container comprises a seal (54) arranged at the contact pin (1) for sealing the opening (51)

8. A manufacturing method for a container (50), in particular according to one of claims 6 or 7,
**characterized by** the steps:
a. Providing a contact pin (1) according to one of claims 1 to 5, and
b. Inserting at least a portion of the contact pin (1) in the opening (51), wherein the element for fastening, positioning and / or securing (221, 222) is braced to hook or claw at the container (50) in the final position.

9. The manufacturing method for a container (50) according to claim 8, wherein
step a) comprises: forming or arranging at least one element for fastening, positioning and / or securing (221, 222) at the contact pin (1), in particular by means of embossing or punching.

10. A manufacturing method for a container according to any one of claims 8 or 9, wherein prior to performing step b) the method comprises placing a seal (54) in the region of the opening (51) and / or on the contact pin (1).

## Revendications

1. Tige de contact (1) pour un récipient (50), en particulier un récipient d'eau de refroidissement, la tige de contact (1) présentant un corps principal (2) avec un axe longitudinal, une première extrémité (20) et une deuxième extrémité (30), la première extrémité (20) étant conçue pour la détection de signaux de mesure et la deuxième extrémité (30) étant conçue comme une électrode de mesure,
dans laquelle, entre la première extrémité (20) et la deuxième extrémité (30), le corps principal de la tige de contact (1) présente une région de maintien (22) présentant au moins un élément destiné à fixer, positionner et/ou sécuriser (221, 222) la tige de contact (1) sur un récipient (50), dans laquelle le récipient (50) présente une ouverture (51) avec un col extérieur (511), et dans laquelle l'élément destiné à fixer, positionner et/ou sécuriser (221, 222) est conçu pour accrocher ou incruster la tige de contact (1) dans une paroi intérieure du col extérieur (511) et présente au moins une barbe, et dans laquelle l'élément destiné à fixer, positionner et/ou sécuriser (221, 222) et le corps principal (2) de la tige de contact (1) sont réalisés d'un seul tenant.

2. Tige de contact (1) selon la revendication 1,
**caractérisée en ce que**
l'élément destiné à fixer, positionner et/ou sécuriser (221, 222) s'étend à distance de l'axe longitudinal du corps principal et/ou la section d'extrémité de l'élément destiné à fixer, positionner et/ou sécuriser (221, 222) est orienté vers la première extrémité de la tige de contact (1).

3. Tige de contact (1) selon l'une des revendications précédentes,
**caractérisée en ce que**
la tige de contact (1) est conçue plate ou comme un drapeau au moins dans la région de l'élément destiné à fixer, positionner et/ou sécuriser (22).

4. Tige de contact (1) selon l'une des revendications précédentes,
**caractérisée en ce que**
dans le plan de la région conçue plate ou comme un drapeau (22), l'élément destiné à fixer, positionner et/ou sécuriser (221, 222) s'étend à distance de l'axe longitudinal.

5. Tige de contact (1) selon l'une des revendications précédentes,
**caractérisée en ce que**
dans une région située entre l'élément destiné à fixer, positionner et/ou sécuriser (221, 222) et la deuxième extrémité de la tige de contact, la tige de contact (1) présente au moins un élément de retenue (3) permettant de fixer un joint d'étanchéité (54) sur le récipient (50).

6. Récipient (50), en particulier un récipient d'eau de refroidissement, comportant
une paroi destinée à délimiter un espace intérieur (53) du récipient (54) ; et
une ouverture (51) avec un col extérieur (511), à travers laquelle au moins une section de la tige de contact (1) fait saillie dans l'espace intérieur du récipient (50),
**caractérisé en ce que**
le récipient (50) comporte une tige de contact (1) selon l'une des revendications précédentes, laquelle est fixée à une paroi intérieure du col extérieur (511) par incrustation, blocage et/ou accrochage.

7. Récipient (50) selon la revendication 6,
**caractérisé en ce que**
le récipient comporte un joint d'étanchéité (54) disposé sur la tige de contact (1) pour assurer l'étanchéité de l'ouverture (51).

8. Procédé de fabrication pour un récipient (50), en particulier selon l'une des revendications 6 ou 7,
**caractérisé par** les étapes suivantes :
a. mise à disposition d'une tige de contact (1) selon l'une des revendications 1 à 7, et
b. introduction d'une partie au moins de la tige de contact (1) dans l'ouverture (51), l'élément destiné à fixer, positionner et/ou sécuriser (221, 222) étant serré pour s'accrocher ou s'incruster dans le récipient (50) dans la position finale.

9. Procédé de fabrication pour un récipient (50) selon la revendication 8, dans lequel l'étape a) comprend : la formation ou la mise en place d'au moins un élément destiné à fixer, positionner et/ou sécuriser (221, 222) sur la tige de contact (1), en particulier par estampage, emboutissage ou matriçage.

10. Procédé de fabrication pour un récipient selon l'une des revendications 8 ou 9, dans lequel le procédé comprend la mise en place d'un joint d'étanchéité (54) dans la région de l'ouverture (51) et/ou sur la tige de contact (1) avant l'exécution de l'étape b).
